# EUROPEAN PATENT APPLICATION

(11) **EP 2 213 399 A1**
(43) Date of publication of application: **04.08.2010**
(21) Application number: 09001137.0
(22) Date of filing: 28.01.2009
(51) Int. Cl.: B23G 5/18

(54) **Triangular cutting insert and tool holder therefor**

(71) Applicant: VARGUS Ltd., 22311 Nahariya (IL)
(72) Inventor: Morgulis, Rafael, 21940 Carmiel (IL)
(74) Representative: Dauster, Katja

(57) **Abstract**

The invention relates to a triangular cutting insert (3) for milling threads provided with at least one cutting corner (32), wherein a protruding direction (x) of the cutting corner (32) extends generally in parallel with a bisector (B) of the opposing sidewall (31), said protruding direction (x) of said cutting corner (32) being offset by a distance (Δ) to said bisector (B) of said opposing sidewall (31). The invention further relates to a tool holder (2) having at least on pocket (22) for receiving a triangular insert (3) and a cutting tool (1) comprising a tool holder (2) and at least one cutting insert (3).

## Description

The invention relates to a triangular cutting insert for milling threads, in particular for use with a tool holder suitable for a rotary milling cutter. The invention further relates to a tool holder for retaining a cutting insert and a cutting tool comprising a tool holder and a cutting insert.

In the context of the invention, tool holders provided with pockets for detachably retaining replaceable cutting inserts are also referred to as "insert type tool holders". For example, insert type tool holders may be attached to rotary milling cutters, wherein a shape of a shaft of the tool holder depends on a clamping system of the milling cutter. Sidewalls or bearing surfaces provided in the pockets of insert type tool holders are used for positioning the inserts, wherein the shape of the pockets generally depends on the shape of the insert.

For use in a milling cutter, the insert is mounted to the tool holder so that a cutting tooth protrudes essentially in the radial direction of the tool holder.

It is known to provide triangular inserts having three cutting corners. If only one cutting tooth is provided on the cutting corner, these triangular inserts are also referred to as single point inserts. Single point inserts may be used to reduce the load acting on the insert during thread cutting. As a result, a feed speed may be increased, thereby the overall machining time may be reduced. Triangular inserts are provided with an upper face having cutting edges, a lower face and sidewalls extending therebetween. Generally, two types of triangular inserts for thread cutting are known, namely inserts having cutting corners with a protruding direction that is inclined with respect to a bisector of an opposing sidewall, and inserts having cutting corners with a protruding direction that coincides with the bisector of the opposing sidewall.

Inserts having cutting corners with a protruding direction that is inclined with respect to a bisector of an opposing sidewall are referred to as "standard style" cutting inserts. For positioning such an insert in a tool holder of a rotary milling cutter, the sidewall opposing the cutting corner in use abuts a bearing surface of a pocket of the tool holder, which is inclined with respect to the longitudinal direction of the tool holder.

When producing threads in small diameter holes and/or when producing threads with large pitches, inserts having cutting corners with a protruding direction that coincides with a bisector of the opposing sidewall may be advantageous. For positioning such an insert in a tool holder of a rotary milling cutter, the sidewall opposing the cutting corner in use abuts a bearing surface of a pocket of the tool holder which extends essentially in parallel with the longitudinal direction of the tool holder. These inserts are also referred to as "U-style inserts".

It is the object of the present invention to provide an U-style cutting insert and a tool holder therefore for producing threads, in particular for milling threads, wherein cutting corners not in use are well protected from damage.

This object is solved by a triangular cutting insert, a tool holder and a cutter tool with the features of claims 1, 8, and 14.

In accordance with a first aspect of the invention, a triangular cutting insert for milling threads, in particular for use with a tool holder for a rotary milling cutter, with at least one cutting corner is provided, wherein a protruding direction of the cutting corner extends generally in parallel with a bisector of the opposing sidewall and the protruding direction is offset by a distance to said bisector of said opposing sidewall.

The distance between the bisector of the sidewall and the protruding direction may be chosen in dependency of the size of the insert.

An inventive cutting insert may be positioned in a pocket of a corresponding tool holder, wherein one cutting corner is in use and protrudes from the holder. Preferably, the sidewall opposing the cutting corner in use abuts a first bearing surface of the pocket extending generally in parallel with the longitudinal axis of the tool holder. At least one cutting corner not in use is positioned in the pocket, wherein in one embodiment the pocket is provided with a clearance for receiving the cutting corner. When the protruding direction of the cutting corner not in use is offset by a distance from the bisector of the opposing sidewall, the cutting corner may be easily positioned in the pocket without contacting the first bearing surface of the pocket. Thereby, a cutting corner not in use may be protected from damage.

According to an embodiment of the cutting insert, said cutting corner is essentially symmetrical with respect to said protruding direction. The form of the cutting corner depends on the thread to be cut.

In another embodiment of the cutting insert, said cutting corner is truncated. In other words, the cutting corner is formed as a frustum corner. Thereby, the rigidity of the cutting corner is increased.

Preferably, a cutting recess is provided adjacent to at least one flank of said cutting corner. The cutting recess serves to process the apex of the threads cut.

In another embodiment, a mounting aperture is provided. The cutting insert may be fixed to a tool holder having a corresponding threaded hole using one or more screws, allowing a reliable attachment and an easy replacement of the insert.

Preferably, said mounting aperture is provided in the centre of an inner circle of said triangular cutting insert. Thereby, it is ensured that when indexing the insert the cutting corner subsequently in use is positioned identically to the previously used cutting corner.

In a preferred embodiment, three cutting corners are provided, each cutting corner having a protruding direction extending generally in parallel with a bisector of the opposing sidewall and being offset to said bisectors of said opposing sidewall. The cutting insert may be indexed for allowing the use of a different cutting corner if a first cutting corner is blunt. Cutting corners not in use are well protected from damage in the pocket of the tool holder, wherein due to the offset a distance between the bearing surface of the pocket and the cutting corners may easily be realized.
The object of the invention is also solved by a tool holder for a cutting insert, provided with at least one pocket, preferably at least two pockets for receiving an inventive triangular cutting insert, each. Preferably, said at least one pocket has an essentially triangular base area that corresponds to the shape of the insert to be received for allowing a reliable and repeatable positioning of the insert. In a preferred embodiment of the tool holder, the tool holder has a shank, which may be attached to a rotary milling cutter. The shank is formed so as to be compatible with a machine clamping system.

In one preferred embodiment, each pocket is provided with at least one bearing surface, preferably two bearing surfaces, for positioning the insert. The bearing surfaces cooperate with sidewalls of the insert. In one embodiment, a first bearing surface extends essentially in parallel with a longitudinal axis of said tool holder. The insert is received by the pocket, wherein the sidewall opposing the cutting corner in use abuts the first bearing surface. Preferably, a clearance is provided in a region of intersection of the bearing surfaces, wherein a cutting corner not in use may be placed in the clearance. According to a preferred embodiment, the pocket, in particular the clearance, is asymmetric with respect to an angle bisector of the angle between the two bearing surfaces. A core section of a respective tool holder may be formed larger than the core section of a conventional tool holder for a U-style insert. Therefore, the rigidity of the tool holder is not impaired, even when several pockets for U-style inserts are provided.

The object is also solved by a cutting tool comprising a tool holder with at least one pocket, in which an inventive triangular insert is retained, wherein a sidewall of the triangular insert opposing a cutting corner in use abuts a bearing surface of the pocket.

In the following, an embodiment of the invention will be described in detail based on several schematic drawings in which
- Fig. 1: is a schematic isometric view of a cutting tool comprising a tool holder with two cutting inserts;
- Fig. 2: is an exploded schematic isometric view of the cutting tool of Fig. 1;
- Fig. 3: is a top view of the cutting insert of Fig. 1;
- Fig. 4: is a side view of the cutting insert of Fig. 3;
- Fig. 5: is a detail of a top view of the cutting tool of Fig. 1 and
- Fig. 6: is a cross-sectional view of the detail of Fig. 5 taken along line VI-VI.

Throughout the drawings, the same elements will be denoted by the same reference numerals.

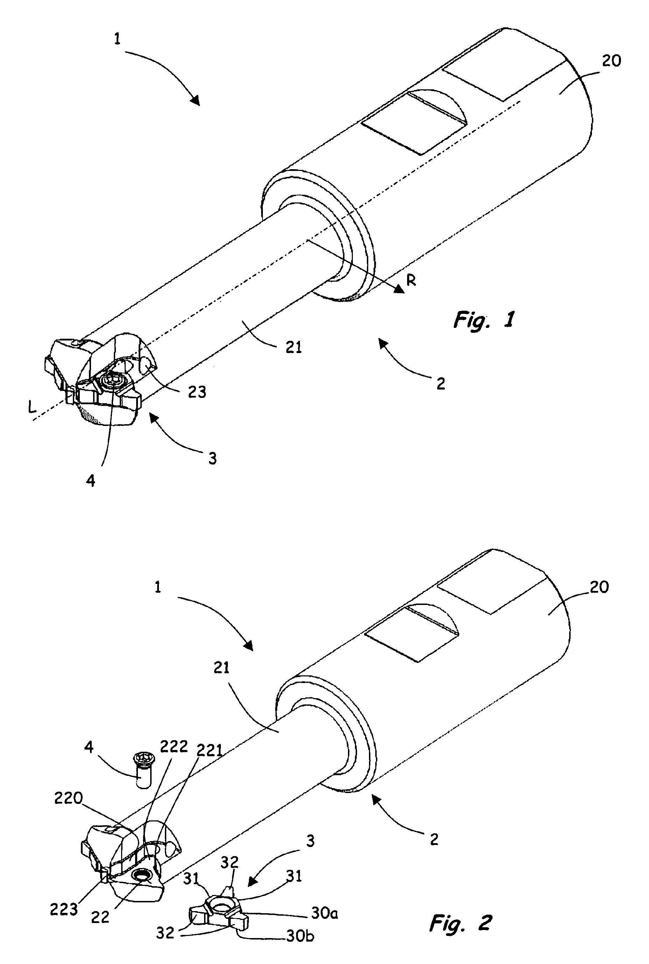

Figs. 1 and 2 are schematic isometric views of a cutting tool 1 comprising a tool holder 2 and two cutting inserts 3, wherein fig. 2 is a exploded view of the cutting tool 1. The tool holder 2 is provided with a shank 20 to be attached to a non-depicted rotary milling cutter. In an end region of a forward protrusion 21 of the tool holder 2, two pockets 22 are provided for receiving a triangular cutting insert 3, each. The two pockets have an essentially triangular base area coinciding with the shape of the insert 3. Each cutting insert 3 is attached to the tool holder 2 using a screw 4. The tool holder 2 is further provided with a conduit 23 for a cooling fluid.

Each cutting insert 3 has an upper face 30a and a lower face 30b having an essentially triangular shape, and sidewalls 31 extending between the upper face 30a and the lower face 30b. The cutting inserts 3 are each provided with three cutting corners 32, wherein during thread cutting only one cutting corner 32 is in use at the time. The cutting corner 32 in use projects essentially in a radial direction R of the tool holder 2. A sidewall 31 opposing the cutting corner 32 in use abuts a bearing surface 220 provided in the pocket 22, which extends essentially in parallel with a longitudinal direction L of the tool holder 2. For a repeatable positioning of the insert 3, a second bearing surface 221 is provided, which a second sidewall 31 of the cutting insert 3 abuts. In a region of the pocket 22, in which the two bearing surfaces 220, 221 intersect, a clearance 222 is provided, for receiving a cutting corner 32 not in use, which is provided between the two sidewalls 31 abutting the bearing surfaces 220, 221. In addition, a second clearance 223 for receiving the second cutting corner 32 not in use is provided in the embodiment shown in the figures.

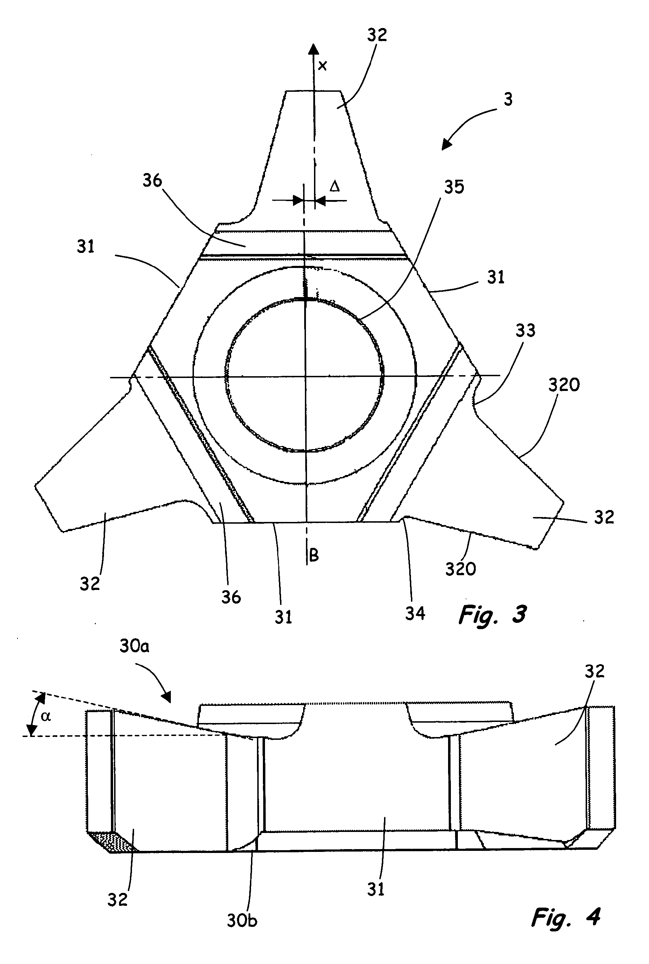

Figs. 3 and 4 are a top view and a side view, respectively, of an inventive cutting insert 3. As described above, the cutting insert 3 has essentially triangular faces 30a, 30b and is provided with three cutting corners 32. The cutting corners 32 of the depicted cutting insert 3 are truncated. Cutting edges are provided on the transition region between the upper face 30a and the sidewalls of the cutting corners 32. A protruding direction x of each cutting corner 32 extends in general in parallel with a bisector B of the opposing sidewall 31 and is offset by a distance Δ to said bisector B. In the depicted embodiment, the protruding direction x is offset to the right. In other embodiments, the protruding direction may be offset to the left, depending on the tool holder design.

In the depicted embodiment, the cutting corners 32 are symmetrical with respect to the protruding direction x. Consequently, the protruding direction x is also the bisector of the respective cutting corner 32. Adjacent to flanks 320 of the cutting corners 32, cutting recesses 33, 34 are provided.

The depicted insert 3 is further provided with a central mounting aperture 35 for mounting the insert 3 to the tool holder 2 of Fig. 1 and 2. As may be seen in Fig. 4, the cutting corners 32 are inclined forming an angle α relative to the upper face 30a. For each cutting corner 32 a chamfer 36 extending in general in parallel with the opposing sidewall 31 is provided.

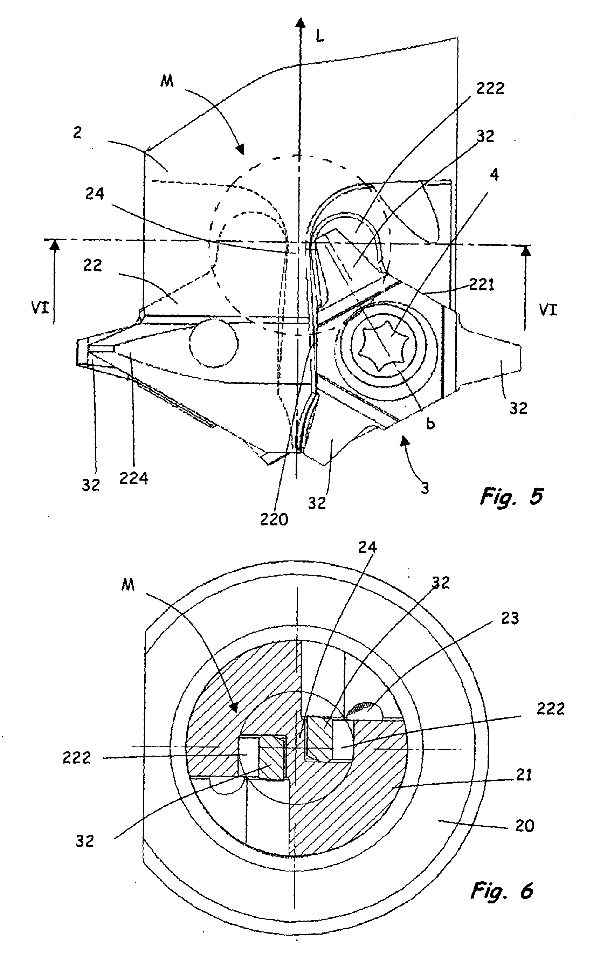

Fig. 5 is an increased top view of the cutting tool 1 of Fig. 1, wherein the two pockets 22 and the insert 3 are shown. The pocket 22 shown on the left is hidden and depicted with dashed lines. Fig. 6 is a cross-sectional view of the cutting tool 1 taken along the line VI-VI of Fig. 5. As may be understood from Fig. 5, the pockets 22, in particular the clearances 222 are asymmetrical with respect to an angle bisector b of the angle between the two respective bearing surfaces 220, 221. The clearance 222 exceeds the triangular base area of the pocket 22 in the direction of the second bearing surface 221, but does not or only marginally exceed the triangular base area of the pocket 22 in the direction of the first bearing surface 220. Thereby, a core 24 of the tool holder 2 remaining in an area M between the pockets 22 may be increased in size. As a result, the rigidity of the tool holder 2 and therefore the rigidity of the cutting tool 1 is increased.

The depicted tool holder 2 is provided with two pockets 22 for receiving tool cutting insert 3. In other embodiments, the tool holder 2 is provided with more than two pockets 22 or only one pocket 22 for receiving a cutting insert. As may be seen in Fig. 5, the pockets 22 are provided with a protrusion 224 on which the cutting corner 32 in use may rest.

## Claims

1. Triangular cutting insert for milling threads provided with at least one cutting corner (32), wherein a protruding direction (x) of the cutting corner (32) extends generally in parallel with a bisector (B) of the opposing sidewall (31), **characterized in that** said protruding direction (x) of said cutting corner (32) is offset by a distance (Δ) to said bisector (B) of said opposing sidewall.

2. Triangular cutting insert according to claim 1, **characterized in that** said cutting corner (32) is essentially symmetrical with respect to said protruding direction (x).

3. Triangular cutting insert according to claim 1 or 2, **characterized in that** said cutting corner (32) is truncated.

4. Triangular cutting insert according to claim 1, 2 or 3, **characterized in that** a cutting recess (33, 34) is provided adjacent to at least one flank (320) of said cutting corner (32).

5. Triangular cutting insert according to any of claims 1 to 4, **characterized in that** a mounting aperture (35) is provided.

6. Triangular cutting insert according to claim 5, **characterized in that** said mounting aperture (35) is provided in the centre of an inner circle of said triangular cutting insert (3).

7. Triangular cutting insert according to any of claims 1 to 6, **characterized in that** three cutting corners (32) are provided, each cutting corner having a protruding direction (x) extending generally in parallel with a bisector (B) of the opposing sidewall (31) and being offset to said bisector (B) of said opposing sidewall (31).

8. Tool holder for a cutting tool, provided with at least one pocket (22), preferably at least two pockets (22), for receiving a triangular cutting insert (3) according to any of claims 1 to 7, each.

9. Tool holder according to claim 8, **characterized in that** said least one pocket (22) is provided with at least one bearing surface (220) for positioning said insert (3).

10. Tool holder according to claim 9, **characterized in that** said least one pocket (22) is provided with two bearing surfaces (220, 221) for positioning said insert (3).

11. Tool holder according to claim 10, **characterized in that** said least one pocket (22) is provided with a clearance (222) in an intersection region of the bearing surfaces (220, 221) for receiving a cutting corner (32) of said insert (3).

12. Tool holder according to claim 11, **characterized in that** said pocket (22) is asymmetric in shape with respect to an angle bisector (b) of the angle between the two bearing surfaces (220, 221).

13. Tool holder according to any of claims 9 to 12, **characterized in that** a first bearing surface (220) extends essentially in parallel with a longitudinal axis (L) of said tool holder (2).

14. Cutting tool comprising a tool holder (2) with at least one pocket (22), in which a triangular insert (3) according to any of claims 1 to 7 is retained, wherein a sidewall (31) of the triangular insert (3) opposing a cutting corner (32) in use abuts a first bearing surface (220) of the pocket (22).
